Europäisches Patentamt

European Patent Office

Office européen des brevets

Veröffentlichungsnummer: **0 272 449**

**A2**

# EUROPÄISCHE PATENTANMELDUNG

Anmeldenummer: 87116873.8

Int. Cl.⁴: **B01J 8/04** , C01C 1/04

Anmeldetag: 16.11.87

Priorität: 22.12.86 DE 3643858

Veröffentlichungstag der Anmeldung:
29.06.88 Patentblatt 88/26

Benannte Vertragsstaaten:
AT BE DE ES FR GB IT NL

Anmelder: **Uhde GmbH**
**Friedrich-Uhde-Strasse 15 Postfach 262**
**D-4600 Dortmund 1(DE)**

Erfinder: **Herbort, Hans-Joachim, Dipl.-Ing.**
**Unnaer Strasse 65b**
**D-5758 Fröndenberg(DE)**
Erfinder: **Marsch, Hans-Dieter, Dipl.-Ing.**
**Overhoffstrasse 193**
**D-4600 Dortmund 76(DE)**
Erfinder: **Graeve, Heinz, Dipl.-Ing.**
**Bittermarkstrasse 33a**
**D-4600 Dortmund 50(DE)**
Erfinder: **Brieke, Hans-Günter, Dipl.-Ing.**
**Godekinstrasse 55**
**D-4600 Dortmund 30(DE)**

Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

Verfahren und Vorrichtung zur Temperaturregelung von Katalysatorbetten in Ammoniaksyntheseanlagen.

Mit einem Verfahren zur Temperaturregelung von Katalysatorbetten in Ammoniaksyntheseanlagen sowie mit entsprechenden Vorrichtungen soll die Möglichkeit geschaffen werden, eine individuelle Regelung einzelner Katalysatorbetten zu schaffen.

Dies wird verfahrensmäßig dadurch gelöst, daß zur Regelung wenigstens eine Teilmenge des das vorletzte Katalysatorbett verlassenden Kreislaufgases einem Dampferzeuger als Wärmetauscher und/oder einer diesen Wärmetauscher umgehenden Bypass-Leitung zugeführt wird, wobei eine Teilmenge kalten Kreislaufgases vor Aufheizung und Zuführung zum ersten Katalysatorbett der genannten Bypass-Leitung als Quentschmittel zuführbar ist, wobei sich eine Vorrichtung dadurch auszeichnet, daß sie als dampferzeugender Rohrbündelwärmetauscher (8) ausgebildet ist und ein das Rohrbündel (17) durchsetzendes Bypass-Rohr (18) aufweist, wobei im Bereich der Sammelkammer für das gekühlte Prozeßgas eine Zumischung von dem das Bypass-Rohr (18) durchströmenden heißen Prozeßgas vorgesehen ist.

## "Verfahren und Vorrichtung zur Temperaturregelung von Katalysatorbetten in Ammoniaksyntheseanlagen"

Die Erfindung richtet sich auf ein Verfahren zur Temperaturregelung von Katalysatorbetten in Ammoniaksyntheseanlagen, bei dem ein Kreislaufgas eingesetzt wird und eine im wesentlichen dem abgeschiedenen Ammoniak entsprechende Menge an Frischgas zugeführt wird.

Bei derartigen Prozessen muß es eine Fülle von Regelungsmöglichkeiten, Katalysatorenbetten betreffend, geben. So springt das Verfahren bei der Ammoniaksynthese erst dann an, wenn im ersten Katalysatorbett eine besondere Temperatur herrscht. Hierzu wird beispielsweise von außen Fremdenergie zugeführt, z.B. durch einen geformten Erhitzer. Ist der Prozeß einmal angesprungen, so ist er wegen der exothermen Reaktion in den Katalysatorbetten in der Regel von dort aus aufrecht zu erhalten, ohne daß es des Einsatzes weiterer Fremdenergie bedarf. Zur Vorwärmung wird daher das Kreislaufgas in der Regel einem dem ersten Katalysatorbett nachgeschalteten Wärmetauscher zugeführt, der von dem das erste Kreislaufbett verlassenden Kreislaufgas beheizt ist. Nachfolgend - schließt sich ein weiteres Katalysatorbett an, dem wiederum ein drittes Katalysatorbett folgen kann.

Ein Regelungsproblem besteht nun darin, daß eine vergleichsweise große Menge an Prozeßgas als Kreislaufgas geführt wird, so daß dafür gesorgt werden muß, daß diese große Menge am Eintritt in das Katalysatorbett jeweils auf Temperaturen gehalten werden, die einerseits hoch genug sind, um die Reaktion in Gang zu halten, andererseits so liegen, daß ein hoher Umsatz erzielt wird und ferner daß die Austrittstemperaturen aus dem Katalysatorbett dabei gering genug gehalten werden, um den Katalysator zu schützen, was unter Umständen nur durch Veränderung von Temperatur und/oder Zusammensetzung des Prozeßgases erreicht wird, d.h. durch Quentsch. Hieraus ergibt sich eine Abhängigkeit der Regelungen der einzelnen Katalysatorbetten voneinander.

Aufgabe der Erfindung ist die Schaffung einer Lösung, mit der sowohl verfahrensmäßig als auch vorrichtungsmäßig eine möglichst individuelle Regelung einzelner Katalysatorbetten möglich ist.

Beim Verfahren der eingangs bezeichneten Art wird diese Aufgabe gemäß der Erfindung dadurch gelöst, daß zur Regelung wenigstens eine Teilmenge des das vorletzte Katalysatorbett verlassenden Kreislaufgases einem Kampferzeuger als Wärmetauscher und/oder einer diesen Wärmetauscher umgehenden Bypass-Leitung zugeführt wird, wobei eine Teilmenge kalten Kreislaufgases vor Aufheizung und Zuführung zum er sten Katalysatorbett der genannten Bypass-Leitung als Quentschmittel zuführbar ist.

Die Erfindung sieht auch vor, daß die Regelung des ersten Katalysatorbettes wenigstens zum Teil über die Quentsche vorgenommen wird. Mit dieser Ausgestaltung kann durch vergleichsweise einfache Mittel erreicht werden, daß die Regelung des ersten Katalysatorbettes nicht unmittelbar die nachfolgenden Katalysatorbetten beeinflußt, womit bei dieser Regelungsart auch ein geringerer Ausbeuteverlust hingenommen werden muß, so ist dies durch die Vereinfachung der Regelung insgesamt durchaus in Kauf zu nehmen.

Die Erfindung sieht auch eine Vorrichtung zur Durchführung des Verfahrens vor, die sich dadurch auszeichnet, daß sie als dampferzeugende Rohrbündelwärmetauscher ausgebildet ist und ein das Rohrbündel durchsetzendes Bypass-Rohr aufweist, wobei im Bereich der Sammelkammer für das gekühlte Prozeßgas eine Zumischung von dem das Bypass-Rohr durchströmenden heißen Prozeßgas vorgesehen ist.

Der mit einem Bypass-Rohr ausgerüstete Rohrbündelwärmetauscher stellt eine besonders zweckmäßige Gestaltung einer erfindungsgemäßen Vorrichtung dar, da hier durch die Dampferzeugung je nach Auslegung eine sehr sensible Steuerung für das nachfolgende Katalysatorbett möglich ist.

Die Erfindung sieht in Ausgestaltung vor, daß als Zumischung ein im wesentlichen zylindrisches Führungsrohr mit axial oder radial verstellbaren Steuerkolben vorgesehen ist, wobei im Führungsrohr und im Steuerkolben Zumischöffnungen vorgesehen sind, die durch axiale oder radiale Bewegung ganz oder teilweise verschließbar sind.

Mit der Erfindung ist es möglich, durch einfache axiale oder radiale Verstellung das jeweilige Verhältnis zwischen heißem und gekühlten Gas einzustellen.

Eine weitere Ausgestaltung besteht nach der Erfindung darin, daß in einer der Endstellungen des Steuerkolbens der Bypass oder der Strömungsweg für die gekühlten Prozeßgase verschlossen ist.

Eine weitere Gestaltung besteht nach der Erfindung darin, daß der Steuerkolben im Inneren des Zylinders axial bewegbar mit einem zentrischen Dichtelement für das Bypass-Rohr ausgebildelt ist.

Eine weitere Ausgestaltung der Erfindung besteht insbesondere bei Wärmetauschern mit gleichem Eintritts-und Austrittsstutzen sowohl für die heißen als auch die gekühlten Gase darin, daß der Steuerkolben als ein das freie Ende des die heißen Gase zum Wärmetauscher leitenden Zentralrohres übergreifendes topfförmiges Steuerelement ausgebildet ist, wobei in der Topfaußenwand die Zumischöffnungen vorgesehen sind. Die Erfindung sieht auch vor, daß an der Außenwand des Zentralrohres nach außen weisende Dichtstege vorgesehen sind, die in der Gebrauchslage in die Zumischöffnungen eingreifen und je nach Endstellung das Zentralrohr oder den Ringraum zwischen Zentralrohr und Topfaußenwand als Bypass-Leitung abdichten.

Die Erfindung ist nachstehend anhand der Zeichnungen beispielsweise näher erläutet. Diese zeigt in

Fig. 1 ein Prinzipschaltbild einer Anlage zur Durchführung des erfindungsgemäßen Verfahrens,

Fig. 2 ein Ausführungsbeispiel einer Vorrichtung nach der Erfindung sowie in

Fig. 3 ein abgewandeltes Beispiel einer erfindungsgemäßen Vorrichtung.

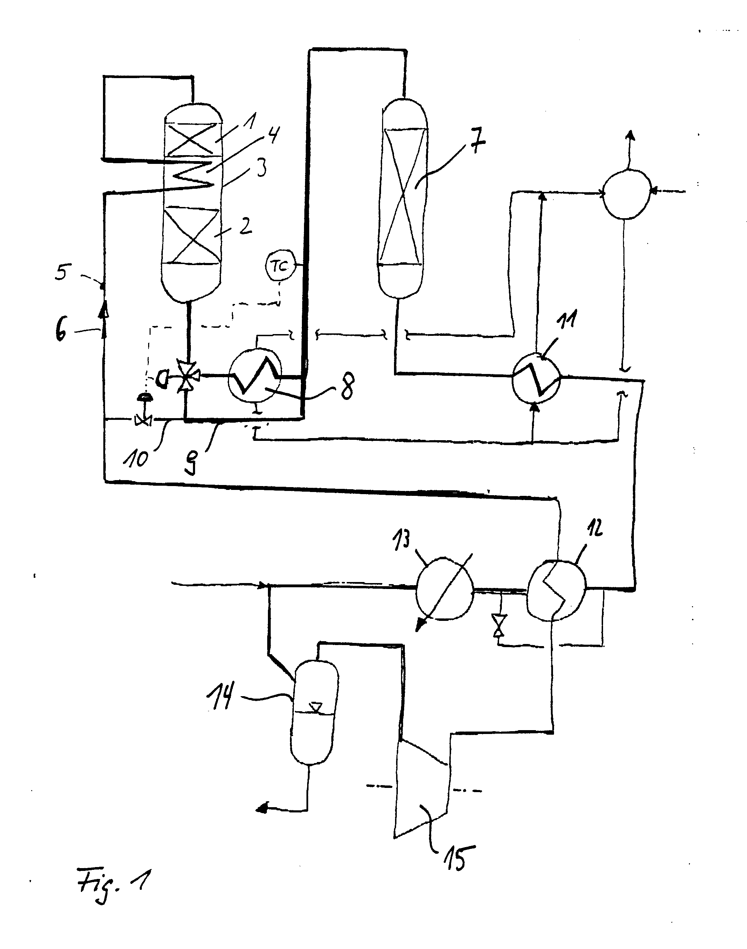

Fig. 1 zeigt ein erstes Katalysatorbett 1, ein zweites Katalysatorbett 2 in einem NH$_3$-Reaktor 3 sowie symbolisch angedeutet einen ersten Wärmetauscher 4 zur Vorwärmung des die Leitung 5 in Richtung des Pfeiles 6 durchströmendes Kreislaufgases. Nach Durchströmen des erstes Katalysatorbettes und des Wärmetauschers 4 sowie des zweiten Katalysatorbettes 2 wird das Kreislaufgas einem dritten Kata lysatorbett 7 zugeführt, wobei zwischen dem zweiten Katalysatorbett 2 und dem dritten Katalysatorbett 3 die erfindungsgemäße Regeleinrichtung vorgesehen ist.

Diese Regeleinrichtung besteht im wesentlichen aus einem Dampferzeuger 8, einer Bypass-Leitung 9 und einer Quentschleitung 10, die alternativ betätigt werden können, wobei mögliche Ausgestaltungen weiter unten näher beschrieben sind. Das Kreislaufgas wird dann aus dem dritten Katalysatorbett 7 über einen weiteren Kampferzeuger 11 einem Gas-Gaswärmetauscher 12, einem Kühler 13 und schließlich einem Abscheider 14 zugeführt, um dann den Kreislaufkompressor 15 zu beaufschlagen, worauf es hier aber nicht näher ankommt.

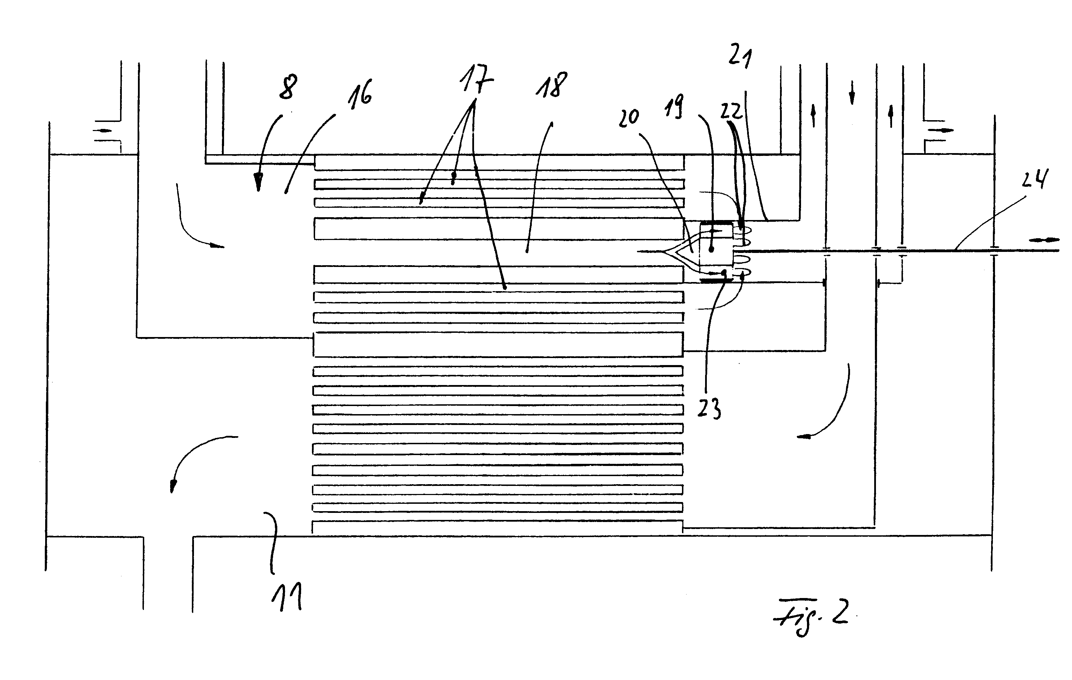

Fig. 2 zeigt die Möglichkeit, die Regelungseinrichtung in einem doppelten Wärmetauscher einzubauen. gemäß Fig. 2 wäre dies die räumliche Zusammenfassung des Dampferzeugers 8 mit dem Dampferzeuger 11. Für die Erfindung wichtig ist zunächst der Dampferzeuger 8, der eine Vorkammer 16, ein Rohrbündel 17 sowie in der Mitte ein zentrisches Bypass-Rohr 18 aufweist, dessen eines Ende von einem Steuerkolben 19 über einen Dichtkegel 20 verschließbar ist.

Der Steuerkolben 19 ist in einem Führungsrohr 21 untergebracht, welches ebenso wie der Steuerkolben Zumischöffnungen 22 aufweist, wobei die Zumischöffnungen des Steuerkol bens mit 23 bezeichnet sind, die vom Steuerkolben 19 entsprechende Stellung der Schubstange 24 am Steuerkolben 19 ganz oder teilweise geöffnet werden können oder völlig verschließbar sind. Je nach Öffnungsstellung ergibt sich im Führungsrohr 21 ein Gemisch aus heißem, das Bypass-Rohr 18 durchströmenden, ungekühlten Prozeßgas mit gekühltem Prozeßgas, welches dann in das nicht näher dargestellte dritte Katalysatorbett eintritt.

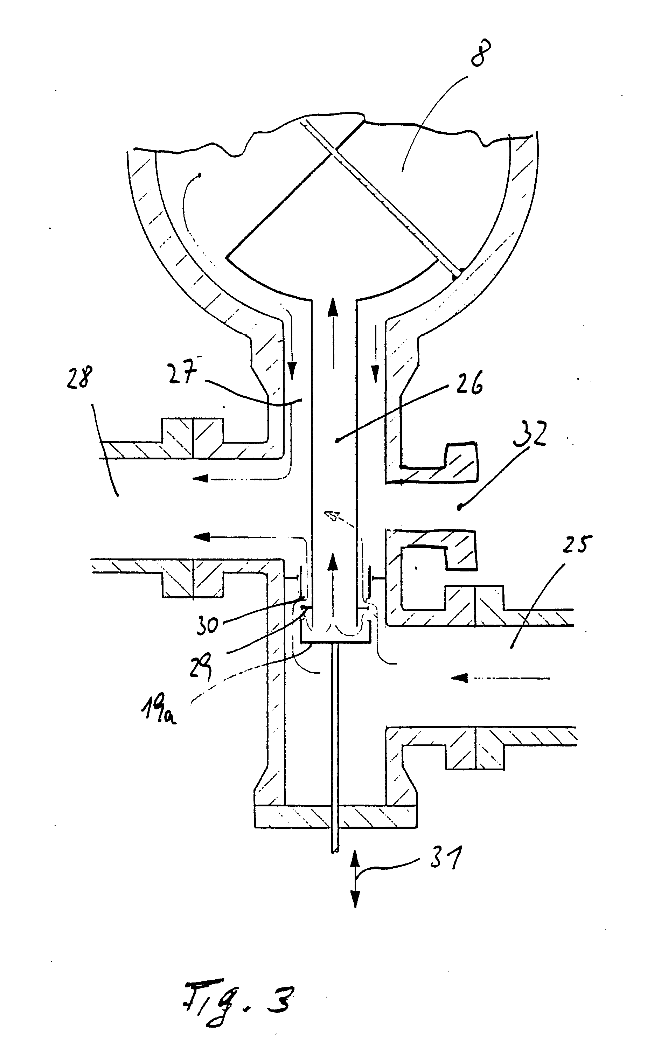

Die jeweilige Gasströmung ist in Fig. 2 sowie in Fig. 3 mit kleinen Pfeilen dargestellt.

Fig. 3 zeigt eine etwas andere Bauweise, wobei hier der Wärmetauscher 8 nur angedeutet ist. Über die unten rechts angedeutete Zuführleitung 25 wird das heiße Prozeßgas eingeleitet. Es strömt bei der wiedergegebenen Stellung eines Steuerkolbens 19a in eine zentrale Zuführleitung 26 zum Wärmetauscher 8, durchströmt diesen und kommt nach Kühlung durch den Ringraum 27 zurück, um eine weitere Leitung 28 zu durchströmen.

Ein Teil des heißen Gases strömt aber auch zwischen der Innenwand des Steuerkolbens 19a und der Außenwand des Zentralrohres 26 durch eine Art Bypass-Leitung direkt in die Leitung 28 und vermischt sich dort mit dem gekühlten Gas aus dem Ringraum 27.

Zur Einstellung des jeweiligen Zumischverhältnisses weist das freie Ende des Zentralrohres Dichtscheiben 29 auf, die in Schlitze 30 in der Außenwand des Steuerkolbens 19a eingreifen. Wird nun beispielsweise der Steuerkolben 19a gemäß Doppelpfeil 31 ganz nach unten gezogen, so stößt die obere Begrenzungskante des Schlitzes 30 auf je eine Scheibe 29 und versperrt so vollständig die Bypass-Leitung, während das Zentralrohr 26 der volle Strömungsquerschnitt zur Verfügung steht. Bei der umgekehrten Lage, d.h. bei einem Verschieben des Steuerkolbens 19a ganz nach oben gemäß Doppelpfeil 31, stoßen die unteren Schlitzbegrenzungen auf die Schieben 29 und sperren so völlig den Zugang zum Zentralrohr 26 ab, so daß das gesamte heiße Gas durch die Bypass-Leitung direkt in den Stutzen 28 strömt.

Zusätzlich ist ein weiterer Rohrstutzen 32 vorgesehen, an den eine nicht näher dargestellte, in Fig. 1 mit 10 bezeichnete Quentschleitung anschleißbar ist, durch die direkt unbehandeltes Kreislaufgas der Leitung 28 bzw. dem Bypass zugeführt werden kann.

## Ansprüche

1. Verfahren zur Temperaturregelung von Katalysatorbetten in Ammoniaksyntheseanlagen, bei dem ein Kreislaufgas eingesetzt und eine im wesentlichen dem abgeschiedenen Ammoniak entsprechende Menge an Frischgas zugeführt wird, dadurch gekennzeichnet, daß zur Regelung wenigstens eine Teilmenge des das vorletzte Katalysatorbett verlassenden Kreislaufgases einem Dampferzeuger als Wärmetauscher und/oder einer diesen Wärmetauscher umgehenden Bypass-Leitung zugeführt wird, wobei eine Teilmenge kalten Kreislaufgases vor Aufheizung und Zuführung zum ersten Katalysatorbett der genannten Bypass-Leitung als Quentschmittel zuführbar ist.

2. Verfahren nach Anspruch 1,
dadurch gekennzeichnet,
daß die Regelung des ersten Katalysatorbettes wenigstens zum Teil über einer Quentsch vorgenommen wird.

3. Vorrichtung, insbesondere zur Durchführung des Verfahrens nach einem der vorangehenden Ansprüche,
dadurch gekennzeichnet,
daß sie als dampferzeugender Rohrbündelwärmetauscher (8) ausgebildet ist und ein das Rohrbündel (17) durchsetzendes Bypass-Rohr (18) aufweist, wobei im Bereich der Sammelkammer für das gekühlte Prozeßgas eine Zumischung von dem das Bypass-Rohr (18) durchströmenden heißen Prozeßgas vorgesehen ist.

4. Vorrichtung nach Anspruch 3,
dadurch gekennzeichnet,
daß als Zumischung ein im wesentlichen zylindrisches Führungsrohr (21) mit axial oder radial verstellbaren Steuerkolben (19) vorgesehen ist, wobei im Führungsrohr (21) und im Steuerkolben (19) Zumischöffnungen (22 bzw. 23) vorgesehen sind, die durch axiale oder radiale Bewegung ganz oder teilweise verschließbar sind.

5. Vorrichtung nach Anspruch 3 oder 4,
dadurch gekennzeichnet,
daß in einer der Endstellungen des Steuerkolbens (19) der Bypass (18) oder der Strömungsweg für die gekühlten Prozeßgase verschlossen ist.

6. Vorrichtung nach Anspruch 3 bis 5,
dadurch gekennzeichnet,
daß der Steuerkolben (19) im Inneren des Führungsrohres (21) axial bewegbar mit einem zentrischen Dichtelement (20) für das Bypass-Rohr (18) ausgebildet ist.

7. Vorrichtung bei einem Wärmetauscher mit gleichem Eintritts-und Austrittsstutzen sowohl für die heißen als auch die gekühlten Gase,
dadurch gekennzeichnet,
daß der Steuerkolben (19) als ein das freie Ende des die heißen Gase zum Wärmetauscher (8) leitenden Zentralrohres (26) übergreifendes topfförmiges Steuerelement ausgebildet ist, wobei in der Topfaußenwand die Zumischöffnungen (30) vorgesehen sind.

8. Vorrichtung nach Anspruch 7,
dadurch gekennzeichnet,
daß an der Außenwand des Zentralrohres nach außen weisende Dichtstege vorgesehen sind, die in der Gebrauchslage in die Zumischöffnungen (30) eingreifen und je nach Endstellung das Zentralrohr (26) oder den Ringraum zwischen Zentralrohr (26) und Topfaußenwand als Bypass-Leitung abdichten.

Fig. 1

Fig. 2

Fig. 3